# EUROPÄISCHE PATENTSCHRIFT

(11) **EP 1 544 021 B1**
(45) Veröffentlichungstag und Bekanntmachung des Hinweises auf die Patenterteilung: **05.03.2008**
(21) Anmeldenummer: 04024453.5
(22) Anmeldetag: 14.10.2004
(51) Int. Cl.: B60K 11/08

(54) **Zuluftkanal für einen Kühler**
Inlet conduit for an air cooler
Canal d'entrée pour un refroidisseur d'air

(30) Priorität: 19.12.2003 DE 10359769
(43) Veröffentlichungstag der Anmeldung: 22.06.2005
(73) Patentinhaber: Dr.Ing. h.c. F. Porsche Aktiengesellschaft, 70435 Stuttgart (DE)
(72) Erfinder: Schmid, Markus, 71297 Moensheim (DE); Grammer, Martin, 71640 Ludwigsburg (DE)

(56) Entgegenhaltungen:
- EP-A- 1 060 933
- DE-A1- 4 238 725
- DE-A1- 19 926 862
- DE-U1- 8 531 720
- US-A- 4 681 178

## Beschreibung

Die Erfindung betrifft einen Zuluftkanal für einen Kühler eines Fahrzeuges gem. dem Oberbegriff des Patentanspruchs 1.

Ein derartiger Zuluftkanal geht aus der DE 199 26 862 C2 hervor und umfasst eine Luftführungshutze und einen daran anschließenden Durchströmkanal. Bei dieser Anordnung wird die Luftführungshutze von außen in die Öffnung des Karosserieaußenhautteils eingesetzt. Örtlich an der Luftführungshutze vorgesehene Fixiernasen sollen sich dabei an einer zweiten stufenförmigen Einprägung des Karosserieaußenhautteils abstützen, so dass umlaufend ein konstantes Spaltmaß zwischen dem Rand der Luftführungshutze und dem Karosserieaußenhautteil erzielt wird.

Die zweifache stufenförmige Einprägung am Randbereich der Öffnung des Karosserieaußenhautteils wird in mehreren nacheinander folgenden Verfahrensschritten hergestellt. Im Bereich der zweiten stufenförmigen Einprägung treten deshalb relativ hohe Toleranzen auf, so dass sich eine gleichbleibende umlaufende Fuge zwischen dem Rand der Luftführungshutze und dem Karosserieaußenhautteil nur durch einen erhöhten Montageaufwand bzw. durch Nacharbeit darstellen lässt.

Aufgabe der Erfindung ist es, ein Befestigungskonzept für die Luftführungshutze und den Durchströmkanal zu schaffen, mit dem ohne Lehre und Werker unabhängig stets eine gleichbleibende Lage der Luftführungshutze und des Durchströmkanals relativ zum Karosserieaußenhautteil gewährleistet ist.

Diese Aufgabe wird erfindungsgemäß durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Anordnung von mehreren, in einem Arbeitsgang gefertigten Beschnittlaschen am Randbereich der Öffnung des Karosserieaußenhautteils die Luftführungshutze und der Durchströmkanal stets lagerichtig positioniert sind und zwar ohne Lehre und Werker unabhängig. Sämtliche Beschnittlaschen werden in einem einzigen Arbeitsgang gefertigt und sorgen dafür, dass stets eine gleichbleibende umlaufende Fuge zwischen Luftführungshutze und Karosserieaußenhautteil gegeben ist. Durch die exakte Positionierung des Durchströmkanals lässt sich dieser schnell und einfach am Karosserieaußenhautteil befestigen. Die Luftführungshutze ist im hinteren Bereich über zumindest ein Federelement mit dem Karosserieaußenhautteil verbunden und über weitere lösbare Rastverbindungen am Durchströmkanal in Lage gehalten. Die Bauteile der Rastverbindungen sind am inneren Halterahmen der Luftführungshutze und an einem endseitigen Rahmenteil des Durchströmkanals vorgesehen und können somit bereits außerhalb des Fahrzeuges montiert werden.

Ein Ausführungsbeispiel der Erfindung ist in der Zeichnung dargestellt und wird im Folgenden näher beschrieben.

Es zeigen
- Fig. 1: eine Teilansicht auf einen Personenkraftwagen mit einer in eine Öffnung eines Karosserieaußenhautteils eingesetzten Luftführungshutze eines Zuluftkanals für einen Kühler,
- Fig. 2: eine Einzelheit X der Fig. 1 in größerer Darstellung,
- Fig. 3: eine Teilseitenansicht auf das Karosserieaußenhautteil mit der vorgesehenen Öffnung, jedoch ohne eingesetzte Luftführungshutze und ohne Durchströmkanal,
- Fig. 4: eine Teilseitenansicht auf das Karosserieaußenhautteil mit dem eingesetzten Durchströmkanal,
- Fig. 5: eine Ansicht von innen auf das Karosserieaußenhautteil mit der eingesetzten Luftführungshutze,
- Fig. 6: einen Schnitt nach der Linie VI-VI der Figur 4 in größerer Darstellung,
- Fig. 7: einen Schnitt nach der Linie VII-VII der Figur 4 in größerer Darstellung,
- Fig. 8: einen Schnitt nach der Linie VIII-VIII der Figur 4 in größerer Darstellung
- Fig. 9: einen Schnitt nach der Linie IX-IX der Fig. 4 in größerer Darstellung.

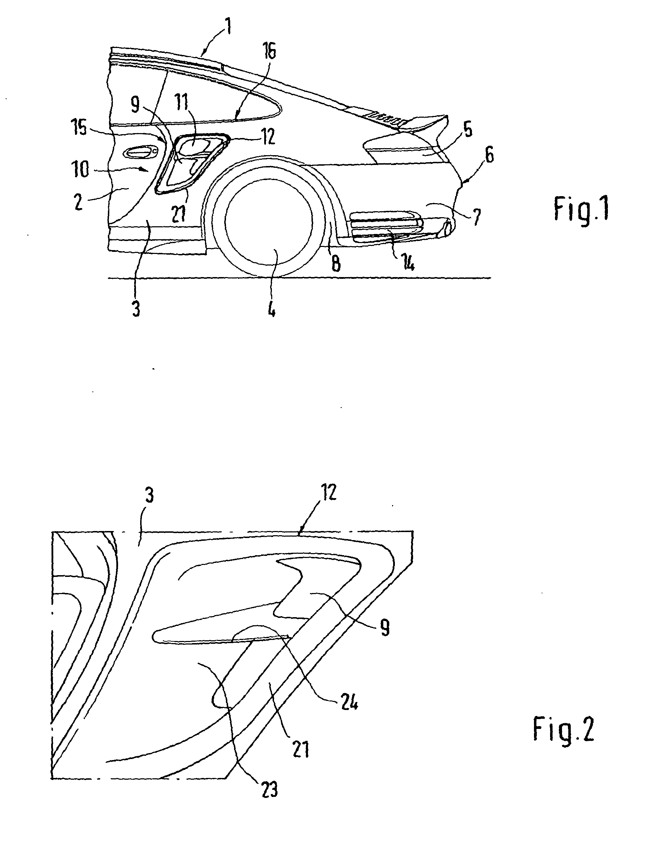

Der in Fig. 1 dargestellte Heckbereich eines Fahrzeuges 1 umfasst seitliche Türen 2, ein dahinterliegend angeordnetes feststehendes Karosserieaußenhautteil 3, Räder 4, heckseitige Leuchteneinheiten 5 und ein äußeres Verkleidungsteil 6 für einen nicht näher gezeigten Stoßfänger. Das Verkleidungsteil 6 ist mit seitlichen Abschnitten 7 bis an angrenzende hintere Radhäuser 8 herangeführt.

Im Heckbereich ist an jeder Fahrzeuglängsseite ein Zuluftkanal 9 für einen nicht näher dargestellten Ladeluftkühler vorgesehen. Der Zuluftkanal weist an seiner Lufteintrittsseite 10 ein in eine Öffnung 11 des Karosserieaußenhautteil 3 eingesetzte Luftführungshutze 12 und einen daran anschließenden geschlossenen Durchströmkanal 13 auf. Der Austritt der durch den Ladeluftkühler hindurchgeführten Luft erfolgt über am Verkleidungsteil 6 angeordnete seitliche Austrittschlitze 14. Das Karosserieaußenhautteil 3 wird im Ausführungsbeispiel durch ein hinteres Seitenteil gebildet.

Benachbart dem hinteren Rand 15 der Tür 2 und etwas unterhalb der Gürtellinie 16 ist am Karosserieaußenhautteil 3 die Öffnung 11 ausgebildet, die annähernd eine viereckige Grundform mit gerundeten Übergangsbereichen zwischen den einzelnen Seiten aufweist. Eine Vorderseite 17 der Öffnung 11 verläuft bereichsweise parallel zum hinteren Rand 15 der Tür, wogegen eine Hinterseite 18 etwas flacher angestellt ist. Eine Oberseite 19 und eine Unterseite 20 der Öffnung 11 sind gegenüber einer horizontalen Hilfsebene leicht nach hinten oben geneigt. Die Luftführungshutze 12 wird von der Fahrzeugaußenseite her in die Öffnung 11 des Karosserieaußenhautteils 3 eingesetzt, wobei sich die Luftführungshutze 12 über einen umlaufenden Kragenabschnitt 21 an einer zweiten äußeren stufenförmigen Einprägung 22 des Karosserieaußenhautteils 3 abstützt. Vom Kragenabschnitt 21 ist ein in den dahinterliegenden Karosseriehohlraum ragender Stutzenabschnitt 23 weggeführt, wobei der Stutzenabschnitt 23 im Ausführungsbeispiel über eine etwa horizontal verlaufende Rippe 24 in zwei übereinanderliegende Abschnitte unterteilt ist.

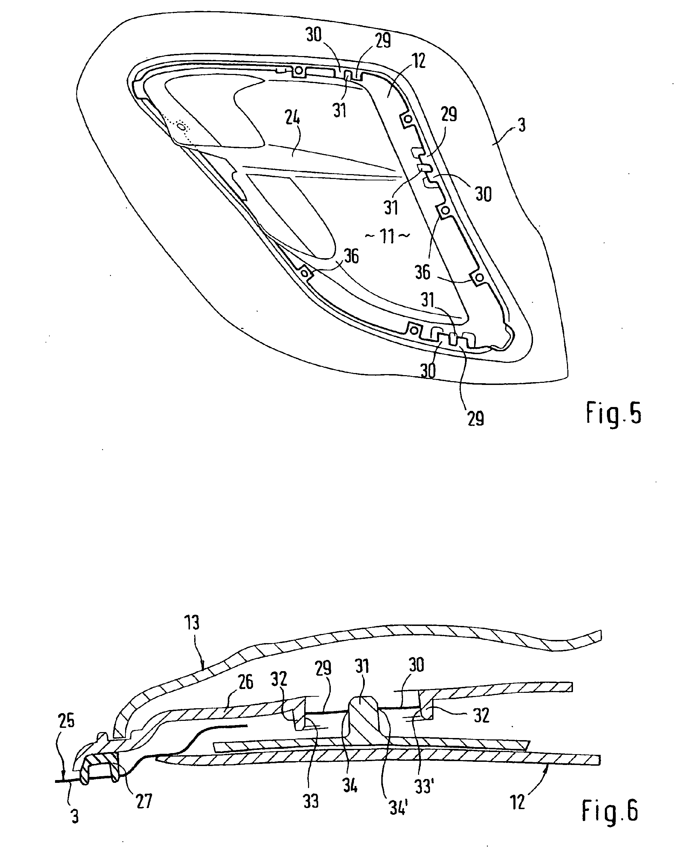

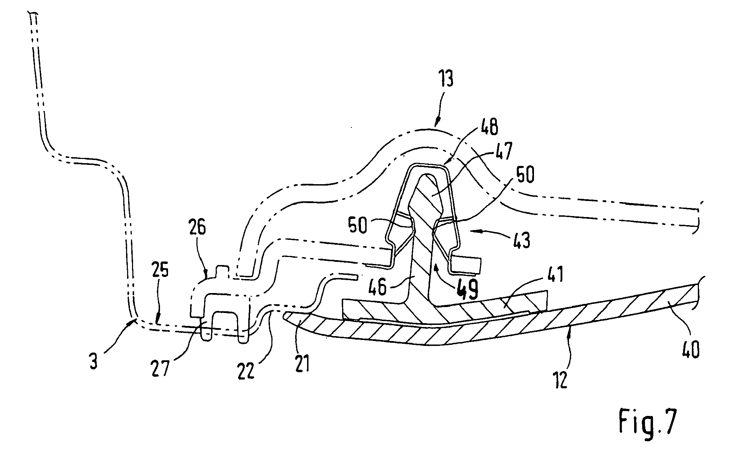

Die Luftführungshutze 12 kann auch mehr oder weniger Rippen 24 aufweisen, die auch vertikal oder schrägverlaufend angeordnet sein können. Der Durchströmkanal 13 wird an die Innenseite 25 des Karosserieaußenhautteils 3 herangeführt und weist benachbart der Öffnung 11 ein endseitiges ringförmiges Rahmenteil 26 auf, das einen umlaufenden Dichtkörper 27 aufnimmt (Fig. 6 und 7).

Zur lagerichtigen Positionierung der Luftführungshutze 12 und/oder des Durchströmkanals 13 sind am Rand 28 der Öffnung 11 erfindungsgemäß mehrere paarweise angeordnete, in die Öffnung 11 hineinragende Beschnittlaschen 29, 30 vorgesehen, die mit Positionierzapfen 31 bzw. Positionierabschnitten 32 der Luftführungshutze 12 und des Durchströmkanals 13 formschlüssig zusammenwirken.

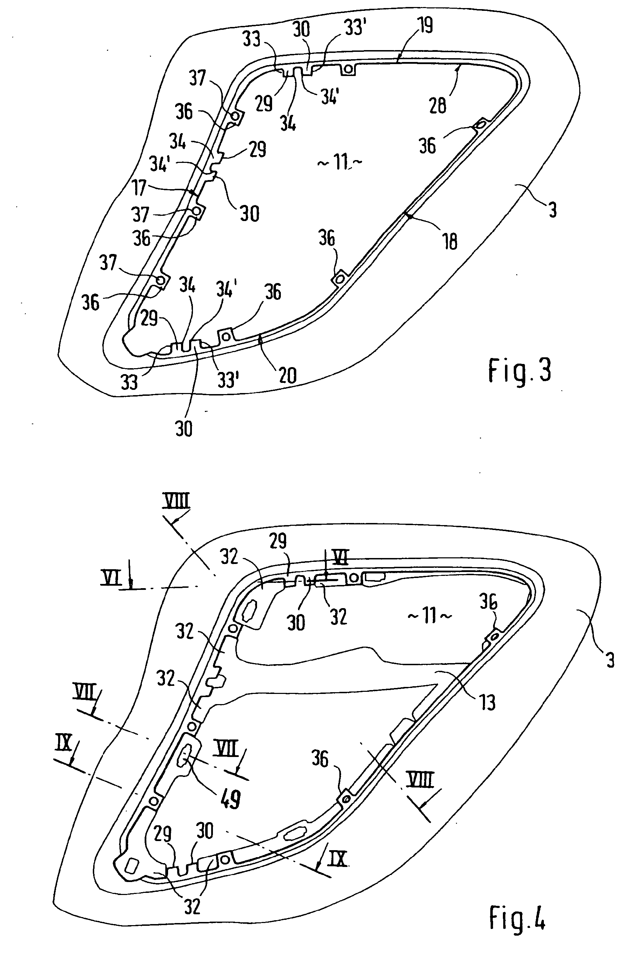

Im Ausführungsbeispiel sind an der Oberseite 19, der Unterseite 20 und der Vorderseite 17 jeweils zwei beabstandet angeordnete rechteckförmige Beschnittlaschen 29, 30 vorgesehen, die bei der Fertigung des Karosserieaußenhautteils 3 ausgestanzt werden. Die äußeren Kanten 33, 33' der Beschnittlaschen 29, 30 dienen als Aufnahme für den Durchströmkanal 13, wogegen die inneren Kanten 34, 34' der Beschnittlaschen 29, 30 als Aufnahme für die Luftführungshutze 12 dienen. Im Ausführungsbeispiel sind die vorstehenden Positionierzapfen 31 der Luftführungshutze 12 zugeordnet, wobei jeder Positionierzapfen 31 mit beiden beabstandeten inneren Kanten 34, 34' der Beschnittlaschen 29, 30 sowie dem dazwischenliegenden Grund der Aufnahme formschlüssig zusammenwirkt. Am Durchströmkanal 13 sind in den Positionierbereichen jeweils zwei beabstandet angeordnete Positionierabschnitte 32 ausgebildet, die mit den äußeren Kanten 33, 33' der beiden Beschnittlaschen 29, 30 formschlüssig zusammenwirken (Fig. 3 bis 6).

Die Beschnittlaschen 29, 30 an der Ober- und Unterseite 19, 20 erstrecken sich jeweils in vertikaler Richtung, wogegen die Beschnittlaschen 29, 30 an der Vorderseite 17 der Öffnung 11 horizontal ausgerichtet sind. Durch die vertikal verlaufenden Beschnittlaschen 29, 30 erfolgt jeweils eine Positionierung in X-Richtung, wogegen die horizontal ausgerichteten Beschnittlaschen 29, 30 eine Positionierung in Z-Richtung bewirken. Durch die Auflage in Y-Richtung, die zweimalige Festlegung in X-Richtung und die zusätzliche Positionierung in Z-Richtung sind alle Freiheitsgrade festgelegt und die Bauteile 12, 13 sind eindeutig positioniert.

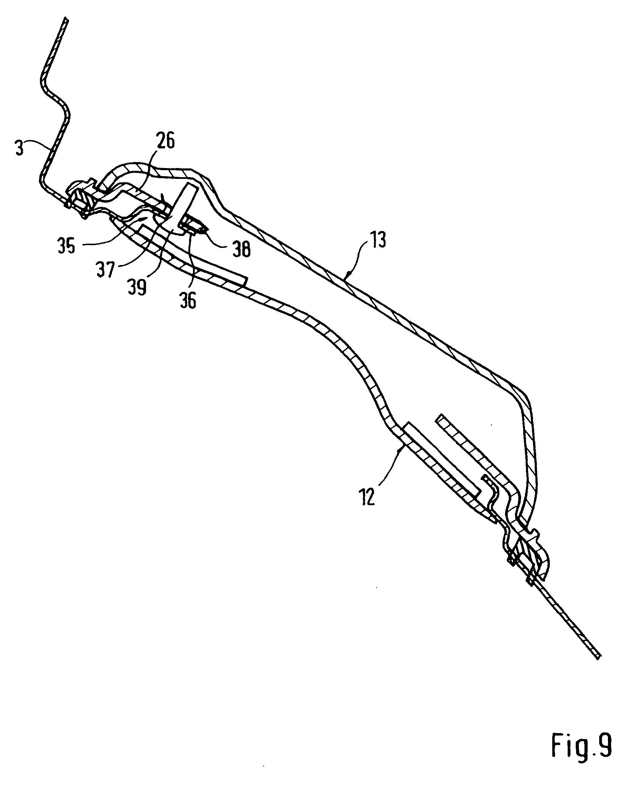

Der innere Durchströmkanal 13 ist über mehrere lösbare Verbindungen, vorzugsweise Schraubverbindungen 35 am Karosserieaußenhautteil 3 befestigt (Fig. 9). Hierzu sind in Befestigungsbereichen des Durchströmkanals 13 randseitig an der Öffnung 11 des Karosserieaußenhautteils 3 vorstehende Haltelaschen 36 mit einer Durchtrittsöffnung 37 vorgesehen. Auf einen ebenfalls mit einer Durchtrittsöffnung versehenen Randbereich des angrenzenden Rahmenteils 26 des Durchströmkanals 13 ist eine Gewindemutter bzw. eine Blechmutter 38 aufgesteckt, in die von der Fahrzeugaußenseite her eine Befestigungsschraube 39 eindrehbar ist.

Die Luftführungshutze 12 besteht aus einer äußeren Lufteinlassblende 40 und einem umlaufenden inneren Halterahmen 41. Beide Bauteile 40, 41 sind in einer nicht näher dargestellten Lehre lagerichtig miteinander verklebt.

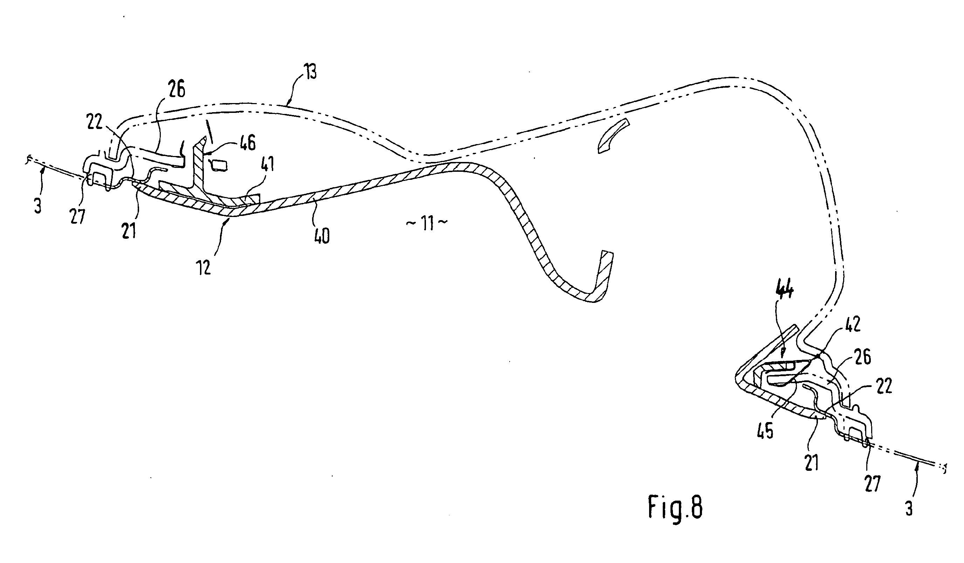

Ein verdecktes Befestigungskonzept für die Luftführungshutze 12 wird dadurch erzielt, dass diese über zumindest ein Federelement 42 und wenigstens eine lösbare Rastverbindung 43 in Lage gehalten ist (Fig. 7 und 8). Im Ausführungsbeispiel sind am hinteren Randbereich 44 der Luftführungshutze 12 zwei übereinanderliegend angeordnete Federelemente 42 vorgesehen, die sich mit einem federnden inneren Schenkel 45 unter Vorspannung am angrenzenden Durchströmkanal 13 abstützen. Die Federelemente 42 sind mit U-förmigen Befestigungsabschnitten auf das freie Ende des inneren Halterahmens 41 aufgesteckt. Der innere Halterahmen 41 hintergreift einen vorderen Randbereich des Durchströmkanals 13 (Fig. 8).

Darüber hinaus ist die äußere Luftführungshutze 12 über mehrere lösbare Rastverbindungen 43 mit dem inneren Durchströmkanal 13 verbunden. Hierzu sind am inneren Halterahmen 41 der Luftführungshutze 12 örtlich angeformte Stege 46 mit endseitigen profilierten Rastnasen 47 vorgesehen, die mit Halteklammern 48 des Durchströmkanals 13 verrastend zusammenwirken. Die Halteklammern 48 sind von der Fahrzeugaußenseite her in Ausnehmungen 49 des endseitigen Rahmenteils 26 des Durchströmkanals 13 eingesetzt und weisen zwei abgestellte nach innen ragende Haltezungen 50 auf, die mit den Rastnasen 47 der Luftführungshutze 12 klemmend zusammenwirken (Fig. 7).

## Patentansprüche

1. Zuluftkanal(9) für einen Kühler eines Fahrzeuges(1), der eine Öffnung (11) eines Karosseineaußenhautteiles (3) aufweist und an seiner Lufteintrittsseite (10) eine in die Öffnung (11) eingesetzte und sich über einen umlaufenden Kragenabschnitt (21) an der Außenseite des KarosserieauBenhautteils (3) abgestützte Luftführungshutze(12) aufweist, wobei vom äußeren Kragenabschnitt (21) der Luftführungshutze(12) ein in den dahinterliegenden Karosseriehohlraum ragender Stutzenabschnitt (23) weggeführt ist und dass die Luftführungshutze (12) an einen angrenzenden geschlossenen Durchströmkanal (13) angeschlossen ist, **dadurch gekennzeichnet, dass** am Rand (28) der Öffnung (11) mehrere paarweise angeordnete, in die Öffnung (11) hineinragende Beschnittlaschen (29, 30) vorgesehen sind, die mit Positionierzapfen (31) und Positionierabschnitten (32) der Luftführungshutze (12) bzw. des Durchströmkanals (13) formschlüssig zusammenwirken, wobei die äußeren Kanten (33, 33') der Beschnittlaschen (29, 30) als Aufnahme für den Durchströmkanal (13) und die inneren Kanten (34, 34') der Beschnittlaschen (29, 30) als Aufnahme für die Luftführungshutze (12) dienen.

2. Zuluftkanal nach Anspruch 1, **dadurch gekennzeichnet, dass** an einer Oberseite (19), einer Unterseite (20) und an einer Vorderseite (17) der Öffnung (11) jeweils zwei beabstandet angeordnete rechteckförmige Beschnittlaschen (29, 30) vorgesehen sind.

3. Zuluftkanal nach Anspruch 1, **dadurch gekennzeichnet, dass** an der Luftführungshutze (12) vorstehende Positionierzapfen (31) angeformt sind, die bei montierter Luftführungshutze (12) mit der durch die inneren Kanten (34, 34') der beabstandeten Beschnittlaschen (29, 30) gebildeten Aufnahme formschlüssig zusammenwirken.

4. Zuluftkanal nach einem der vorangegangenen Ansprüche, **dadurch gekennzeichnet, dass** am Durchströmkanal (13) im Bereich der Beschnittlaschen (29, 30) jeweils zwei beabstandet angeordnete Positionierabschnitte (32) vorgesehen sind, die mit den äußeren Kanten (33, 33') der Beschnittlaschen (29, 30) formschlüssig zusammenwirken.

5. Zuluftkanal nach einem der vorangegangenen Ansprüche, **dadurch gekennzeichnet, dass** der innere Durchströmkanal (13) über lösbare Verbindungen (z.B. Schraubverbindungen) am Karosserieaußenhautteil (3) befestigt ist.

6. Zuluftkanal nach Anspruch 5, **dadurch gekennzeichnet, dass** in Befestigungsbereichen für den Durchströmkanal (13) randseitig an der Öffnung (11) des Karosserieaußenhauteils (3) Haltelaschen (36) mit jeweils einer Durchtrittsöffnung (37) ausgebildet sind, wobei auf jede Haltelasche (36) eine Gewindemutter (38) aufsteckbar ist, in die eine Befestigungsschraube (39) zum Festlegen des Durchströmkanals (13) eindrehbar ist.

7. Zuluftkanal nach einem der vorangegangenen Ansprüche, **dadurch gekennzeichnet, dass** die äußere Luftführungshutze (12) über zumindest ein Federelement (42) mit dem Karosserieaußenhautteil (3) zusammenwirkt.

8. Zuluftkanal nach einem der vorangegangenen Ansprüche, **dadurch gekennzeichnet, dass** die äußere Luftführungshutze (12) über lösbare Rastverbindungen (43) mit dem inneren Durchströmkanal (13) verbunden ist.

9. Zuluftkanal nach einem der vorangegangenen Ansprüche, **dadurch gekennzeichnet, dass** die Luftführungshutze (12) aus einer äußeren Lufteinlassblende (40) und einem inneren umlaufenden Halterahmen (41) besteht, wobei beide Teile in einer Lehre lagerichtig miteinander verklebt sind.

10. Zuluftkanal nach Anspruch 9, **dadurch gekennzeichnet, dass** am Halterahmen (41) örtliche angeformte Stege (46) mit endseitigen Rastnasen (47) vorgesehen sind, die mit Halteklammern (48) des Durchströmkanals (13) verrastend zusammenwirken.

## Claims

1. Inlet conduit (9) for a cooler of a vehicle (1), which has an opening (11) in a body skin part (3) and which has, on its air entry side (10), an air-guiding scoop (12) which is inserted into the opening (11) and is supported, via an encircling collar section (21), on the outside of the body skin part (3), wherein a connection section (23) is led away from the outer collar section (21) of the air-guiding scoop (12), the connection section projecting into the body cavity located behind said air-guiding scoop, and wherein the air-guiding scoop (12) is connected to an adjacent closed through-flow conduit (13), **characterized in that** a plurality of trim lugs (29, 30) are arranged in pairs on the rim (28) of the opening (11) and project into the opening (11), the trim lugs interacting in a form-fitting manner with positioning pins (31) and positioning sections (32) of the air-guiding scoop (12) or of the through-flow conduit (13), with the outer edges (33, 33') of the trim lugs (29, 30) serving as a holder for the through-flow conduit (13) and the inner edges (34, 34') of the trim lugs (29, 30) serving as a holder for the air-guiding scoop (12).

2. Inlet conduit according to Claim 1, **characterized in that** two rectangular trim lugs (29, 30) arranged at a distance from each other are provided in each case on an upper side (19), a lower side (20) and on a front side (17) of the opening (11).

3. Inlet conduit according to Claim 1, **characterized in that** projecting positioning pins (31) are integrally formed on the air-guiding scoop (12) and, when the air-guiding scoop (12) is fitted, interact in a form-fitting manner with the holder formed by the inner edges (34, 34') of the spaced-apart trim lugs (29, 30).

4. Inlet conduit according to one of the preceding claims, **characterized in that** in each case two positioning sections (32) arranged at a distance from each other are provided on the through-flow conduit (13) in the region of the trim lugs (29, 30) and interact in a form-fitting manner with the outer edges (33, 33') of the trim lugs (29, 30).

5. Inlet conduit according to one of the preceding claims, **characterized in that** the inner through-flow conduit (13) is fastened to the body skin part (3) via releasable connections (for example screw connections).

6. Inlet conduit according to Claim 5, **characterized in that** retaining lugs (36) each having a passage opening (37) are formed in fastening regions for the through-flow conduit (13) on the rim of the opening (11) of the body skin part (3), with a threaded nut (38) being placeable onto each retaining lug (36) and into which nut a fastening screw (39) for fixing the through-flow conduit (13) can be screwed.

7. Inlet conduit according to one of the preceding claims, **characterized in that** the outer air-guiding scoop (12) interacts with the body skin part (3) via at least one spring element (42).

8. Inlet conduit according to one of the preceding claims, **characterized in that** the outer air-guiding scoop (12) is connected to the inner through-flow conduit (13) via releasable latching connections (43).

9. Inlet conduit according to one of the preceding claims, **characterized in that** the air-guiding scoop (12) comprises an outer air admission cover (40) and an inner encircling retaining frame (41), with the two parts being adhesively bonded to each other in the correct position in a gauge.

10. Inlet conduit according to Claim 9, **characterized in that** local integrally formed webs (46) with latching projections (47) on the end side are provided on the retaining frame (41) and interact in a latching manner with retaining clamps (48) of the through-flow conduit (13).

## Revendications

1. Canal d'entrée d'air (9) pour un refroidisseur d'un véhicule (1), qui présente une ouverture (11) d'une pièce de carrosserie extérieure (3) et qui comprend, sur son côté d'entrée d'air (10), un déflecteur de guidage d'air (12) introduit dans l'ouverture (11) et appuyé sur le côté extérieur de la pièce de carrosserie extérieure (3) au moyen d'une partie de rebord périphérique (21), dans lequel une partie de tuyau (23) pénétrant dans l'espace creux sous-jacent de la carrosserie part de la partie de rebord extérieur (21) du déflecteur de guidage d'air (12), et dans lequel le déflecteur de guidage d'air (12) est raccordé à un canal de passage fermé adjacent (13), **caractérisé en ce qu'**il est prévu, sur le bord (28) de l'ouverture (11), plusieurs pattes cisaillées (29, 30) disposées par paires et pénétrant dans l'ouverture (11), qui coopèrent en complémentarité de forme avec des tenons de positionnement (31) et des découpes de positionnement (32) du déflecteur de guidage d'air (12) ou du canal de passage (13), dans lequel les arêtes extérieures (33, 33') des pattes cisaillées (29, 30) servent de logement pour le canal de passage (13) et les arêtes intérieures (34, 34') des pattes cisaillées (29, 30) servent de logement pour le déflecteur de guidage d'air (12).

2. Canal d'entrée d'air selon la revendication 1, **caractérisé en ce qu'**il est prévu, sur un côté supérieur (19), un côté inférieur (20) et sur un côté avant (17) de l'ouverture (11), chaque fois deux pattes cisaillées rectangulaires (29, 30) espacées l'une de l'autre.

3. Canal d'entrée d'air selon la revendication 1, **caractérisé en ce que** des tenons de positionnement saillants (31) sont formés sur le déflecteur de guidage d'air (12), qui coopèrent en complémentarité de forme avec le logement formé par les arêtes intérieures (34, 34') des pattes cisaillées espacées (29, 30), lorsque le déflecteur de guidage d'air (12) est monté.

4. Canal d'entrée d'air selon l'une quelconque des revendications précédentes, **caractérisé en ce qu'**il est prévu sur le canal de passage (13), dans la région des pattes cisaillées (29, 30), chaque fois deux découpes de positionnement (32) espacées l'une de l'autre, qui coopèrent en complémentarité de forme avec les arêtes extérieures (33, 33') des pattes cisaillées (29, 30).

5. Canal d'entrée d'air selon l'une quelconque des revendications précédentes, **caractérisé en ce que** le canal de passage intérieur (13) est fixé par des assemblages démontables (par exemple des assemblages vissés) à la pièce de carrosserie extérieure (3).

6. Canal d'entrée d'air selon la revendication 5, **caractérisé en ce que** des pattes de fixation (36) présentant chaque fois une ouverture de passage (37) sont formées sur le bord de l'ouverture (11) de la pièce de carrosserie extérieure (3) dans des régions de fixation pour le canal de passage (13), dans lequel on peut engager sur chaque patte de fixation (36) un écrou fileté (38), dans lequel une vis de fixation (39) peut être vissée pour immobiliser le canal de passage (13).

7. Canal d'entrée d'air selon l'une quelconque des revendications précédentes, **caractérisé en ce que** le déflecteur de guidage d'air extérieur (12) coopère avec la pièce de carrosserie extérieure (3) au moyen d'au moins un élément de ressort (42).

8. Canal d'entrée d'air selon l'une quelconque des revendications précédentes, **caractérisé en ce que** le déflecteur de guidage d'air extérieur (12) est assemblé au canal de passage intérieur (13) au moyen d'assemblages par encliquetage démontables (43).

9. Canal d'entrée d'air selon l'une quelconque des revendications précédentes, **caractérisé en ce que** le déflecteur d'air extérieur (12) se compose d'un écran d'entrée d'air extérieur (40) et d'un cadre de maintien périphérique intérieur (41), dans lequel les deux parties sont collées l'une à l'autre en position correcte dans un gabarit.

10. Canal d'entrée d'air selon la revendication 9, **caractérisé en ce qu'**il est prévu des nervures (46) formées localement sur le cadre de maintien (41) avec des ergots d'encliquetage d'extrémité (47), qui coopèrent par encliquetage avec des attaches de maintien (48) du canal de passage (13).
